# EUROPEAN PATENT SPECIFICATION

(11) **EP 2 279 320 B1**
(45) Date of publication and mention of the grant of the patent: **12.09.2018**
(21) Application number: 09732127.7
(22) Date of filing: 01.04.2009
(51) Int. Cl.: G02B 26/00, E06B 9/24, E06B 3/67

(54) **METHOD OF FILLING THE BETWEEN-PANE SPACE OF COMPOSITE WINDOWPANES HAVING FLUIDTIGHT INTER-PANE SPACES FILLED WITH COLOURED FLUIDS AND CORRESPONDING SYSTEM.**
VERFAHREN ZUM FÜLLEN DES ZWISCHENRAUMES VON VERBUNDFENSTERSCHEIBEN MIT FLUIDDICHTEN ZWISCHENRÄUMEN, DIE MIT FARBIGEN FLUIDEN GEFÜLLT SIND, UND ENTSPRECHENDES SYSTEM.
PROCÉDÉ DE REMPLISSAGE DE L'ESPACE ENTRE LES VITRES D'UN VITRAGE COMPOSITE COMPORTANT DES ESPACES ENTRE LES VITRES ÉTANCHES REMPLIS DE FLUIDES COLORÉS ET SYSTÈME CORRESPONDANT.

(30) Priority: 14.04.2008 PL 38492408
(43) Date of publication of application: 02.02.2011
(73) Proprietor: Kozdras, Jan, 38-540 Zagórz (PL); Rabczak, Ireneusz, 38-500 Sanok (PL)
(72) Inventor: Stafiej, Andrzej, 38-500 Sanok (PL); Rabczak, Ireneusz, 38-500 Sanok (PL); Stafiej, Tomasz, 38-500 Sanok (PL)
(74) Representative: Warzybok, Tadeusz
(86) International application number: PCT/PL2009/000029
(87) International publication number: WO 2009/128736

(56) References cited:
- BE-A1- 841 731
- DE-A1- 1 921 729
- FR-A- 2 599 781
- FR-A- 2 846 363
- US-A- 4 044 519

## Description

The subject-matter of the present invention is a method of improving functional parameters of objects with transparent composite elements in particular those of motor cars, aeroplanes, and buildings provided with composite windows, and a system of electronic devices to use this method.

Known from Polish Standard PN-B-13079: 1997 is a composite window which is a unit composed of at least two panes of glass which are separated from each other on their whole circumference by a spacing element and are joined together by means of various sealing processes applied to their borders, having air-tight sealed spaces between the panes of glass which contain moisture absorbers and air or other gases. The glass panes are made as single-chamber or multiple chamber composites with glass in various colour shades and various refraction coefficients, whereas typical colour shades include blue, brown, green, or graphite. The so made combined windows have many advantages because they can protect a given object against the loss of heat, prevent its becoming excessively heated or against the noise, and they are known as heat absorbing, sun proof and sound absorbing windows.

Known from the Polish patent description No. 184220 is a transparent building element composed of at least two panes of transparent material situated parallel to one another to create an intermediate space, having at least one plate and/or a mat from the fibre reinforced aero-gel.

From the Polish patent application No. 179736 is also known the method of assembling composite windows, consisting in that pre-prepared is a glass unit composed of one glass pane with a spacer sticking to it and provided with a sealant and an elastic element, to both of which another pane of glass is sticking to define a between-pane space about which the spacer is sticking. From the so pre-prepared unit the air is removed out of the between-pane space and afterward a gas with a thermal conductivity lesser than this of air is brought into it and after, the panes of glass are compressed together to seal the between-pane space.

Also from specification of the Polish patent application No. 354376 known are transparent thermal insulations with a high thermal resistance, in particular combined windows are meant whose medium, which fills the insulations, is an invisible amorphous means whose all ingredients have a similar coefficient of refraction and dispersion of light. The medium is a two-phase polymer-fluid system composed of a polymer-spongy skeleton filled with transparent fluid of weak thermal conductivity, the both media having similar coefficients of refraction and dispersion of light.

Further is known from the specification of the Polish patent application no. 312835 a colouring compound containing a colouring means and a transorber of ultraviolet radiation, which colouring means is able to change the colour when the absorber is subjected to the action of this ultraviolet radiation, the transorber absorbing the ultraviolet radiation and reacting with the colouring means to change its colour irreversibly.

The above qualities of the windows (panes of glass) give rise to a diverse use of the windows among other things as car windscreens, panoramic and futuramic windows and in the building industry especially as building sight partitions or as solar batteries.

From the patent description DE 1921729 A1 is known a window having at least one thin and leak-proof chamber formed between two transparent glass-panels with the same dimensions, said chamber being connected to the outer space with the aid of few holes from which at least one hole serves to let in and let out, by means of pipes and a pump, coloured fluids delivered to this chamber from tanks.

The patent description US 4044519 A discloses an insulated window assembly with a double glass-panel to selectively change the colour of the light passing through it. This assembly has at least two transparent glass-panels forming between them an air-tight space equipped with a hole connected with the aid of pipes to at least three tanks containing respectively two different coloured anti-freeze fluids and one cleaning fluid to remove the remains of the fluid from the between-glass panel space. Between this assembly and the pipes there are: a pump to be driven by a reversible motor (a motor whose revolutions can be changed into opposite/contrary direction), electromagnetic valves, non-return valves and a selector to choose only one tank with the coloured fluid to be pumped, by means of this pump, into the between glass-panel space of this window assembly.

From the patent description FR 2846363A is known a roof window which makes it possible to reduce the outer brightness with the aid of different colours. The window has four flat transparent glass-panels seated in the window frame, between these glass-panels there are leak-proof spaces into the interior of which is introduced, by means of a pump and thereto connected pipes, a coloured fluid to be found in the tanks easy to be replaced or removed.

Known from the patent description FR 2599781A1 an assembly of transparent plate-like elements forming a glazed aperture of a window or shop window is composed of at least two translucent or transparent plates, between which is formed an air-tight space, in the case of three plates there are formed two leak-proof spaces there, which can be filled with a coloured fluid. The empty and air tight spaces of this assembly are connected, in their lower portion, by means of pipes and through pumps to the tanks containing in them coloured fluids or a colour gas, whereas the spaces in their upper portion have valves to vent these spaces during their being filled with a coloured fluid.

Furthermore, a device and a method, known from the patent description BE 841731A1, for controlling transmission of the window light has an assembly composed of two transparent plates forming between them a leak-proof chamber which can be filled with a layer of coloured fluid. This chamber has means to fill it and to remove from it the coloured fluid and the means to vent it during its being filled with this fluid, and in its lower portion it is connected by a pump and pipes to the tanks containing colourful fluids and in addition to that it has, in its lower portion, an air escape hole to be blocked by a float during filling this chamber. The pump together with the pipes and tanks with coloured fluids are provided in its casing or outside the window.

Solutions known from prior art patents such as DE 1921729 A1, US 4044519 A, FR 2846363 A , FR 2599781 A1, or BE 841731 A1 providing for one or several liquid-tight chambers formed between transparent plate elements allow to fill the chambers with liquids of a single colour selected visually by a user of these solutions who, at his/her own discretion, select a colour for the liquid depending on the degree of irradiation of the glass panes forming the chambers. However, none of the solutions allows to optimise the process of selection of colour of the liquid appropriate at a given moment, i.e. to change the colour of liquid in the inter-pane space in the course of varying atmospheric conditions prevailing in the air surrounding the object equipped with such composite windowpanes.

Moreover, composite windowpanes made according to the prior-art solutions equipped with transparent elements do not meet all of the expectations of users of motor cars, aeroplanes, and glazed building structures in cases when weather conditions around these objects element vary, especially because of fog, blizzard, rain, or snowfall, which results in reduction of visible (electromagnetic) radiation.

The objective of the present invention is to provide a method of filling an inter-pane space or inter-pane spaces in composite windowpanes comprising transparent elements with a coloured medium or coloured media and changing their colour or colours in the course of varying weather conditions prevailing in air surrounding the object equipped with such composite windowpanes reducing the visibility and thus maintaining at least previous functional properties, especially visible radiation transmitted by such panes in variable conditions and significant improvement of functional qualities of said objects, including heat-insulation and sunlight-insulation properties in the course of prevalence of optimum weather conditions. An additional objective of the invention is to provide an electronic system allowing to obtain a homogenous colour of medium or media introduced to inter-pane space or spaces and to control the process of changing the colour or colours of the medium or media adapted to varying weather conditions prevailing in air around the object equipped with the composite windowpane.

It has been unexpectedly found that by introducing a carrier or carriers with appropriate dye or dyes into the inter-pane space or spaces of a composite windowpane and obtaining in such space or spaces a homogenous colour adapted to current weather conditions prevailing in the air surrounding a motor car equipped with composite windowpanes filled with the dye resulted in obtaining a normal visibility in the course of dense fog, blizzard, rain, and snowfall, and in the course of normal sunny weather, significant reduction of the car interior warming up relating to the sunlight.

The essential feature of the method of improving functional parameters of objects equipped with transparent composite windowpanes, especially motor cars, aeroplanes, and building structures according to the invention consists in that the illumination intensity is measured with the use of a light meter and parameters of atmospheric air surrounding the composite windowpane of the object are determined, and then, depending on the obtained results of the measurements, empty inter-pane space or spaces of the windowpanes are filled with a mixture of dye carriers from the system storage container in a way controlled by the controller running a control program. The dye carriers, after additive mixing with each other, result in obtaining the required optimal homogenous colour in these inter-pane spaces adapted to current weather conditions prevailing in the air surrounding the object, whereby as the dye carriers, a fluid is used, and moreover, values of refraction indexes of dye carriers filling the inter-pane spaces are close to each other.

The essential feature of the system of composite windowpanes for using the method according to the invention consists in that it comprises a light meter output of which is connected with input of a controller equipped with a microprocessor with a computer program, output of which is in turn connected with input of the reversible pump, coupled reversibly and tightly with a storage container of dye carriers and with inter-pane space or spaces of composite windowpanes. The system of electronic devices comprises preferably an analog-digital microcomputer output of which is connected with an input of the reversible pump, coupled reversibly and tightly with a storage container for dye carriers and with a inter-pane space or inter-pane spaces of composite windowpanes.

The solution according to the invention consisting in filling inter-pane spaces in composite windowpanes with a medium the colour of which depends on parameters of atmospheric air surrounding an object equipped with such composite windowpanes has numerous functional and economical merits. In particular, among the merits of the solution one should mention the possibility to maintain optimum visibility in variable weather conditions, especially in case of fog, blizzard, or rain, which is of special importance for motor cars and aeroplanes driven or flown in such conditions, especially with respect to safety of driving or flying.

Among the merits of solution of the relevant technical problem according to the invention, one should mention also the possibility to ensure protection of various objects equipped with composite windowpanes with varying colour against excessive heating of interiors of such objects and improve heating of such interiors in periods of prevailing low temperatures which translates into reduction of costs relating both to cooling and heating. Further merits of the solution according to the invention include the possibility of obtaining decorative compositions in objects with composite windowpanes by changing the colour of a medium filling inter-pane spaces of such windowpanes.

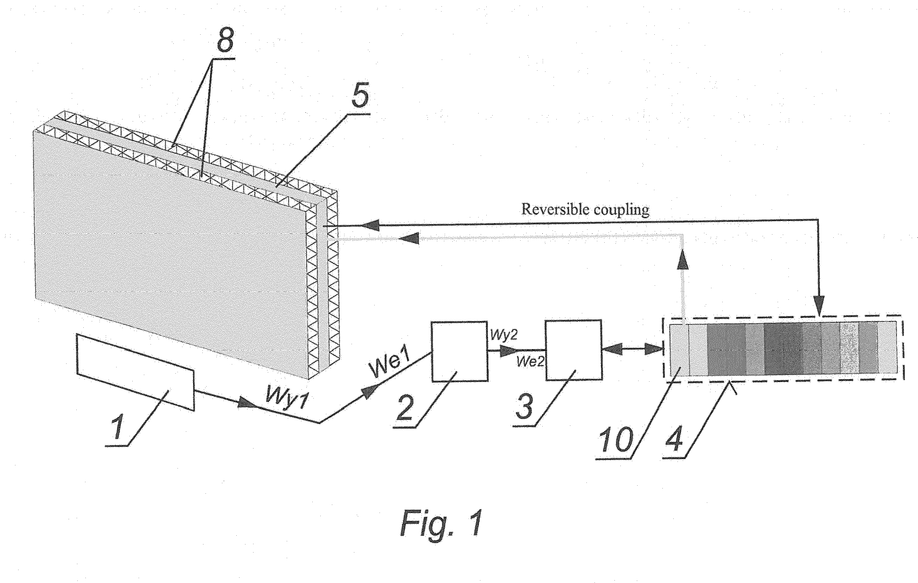

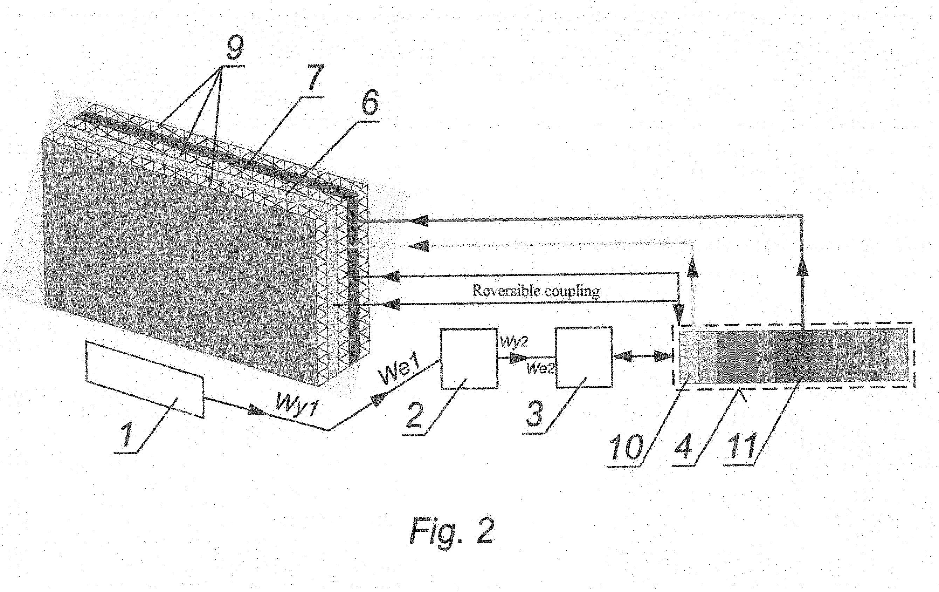

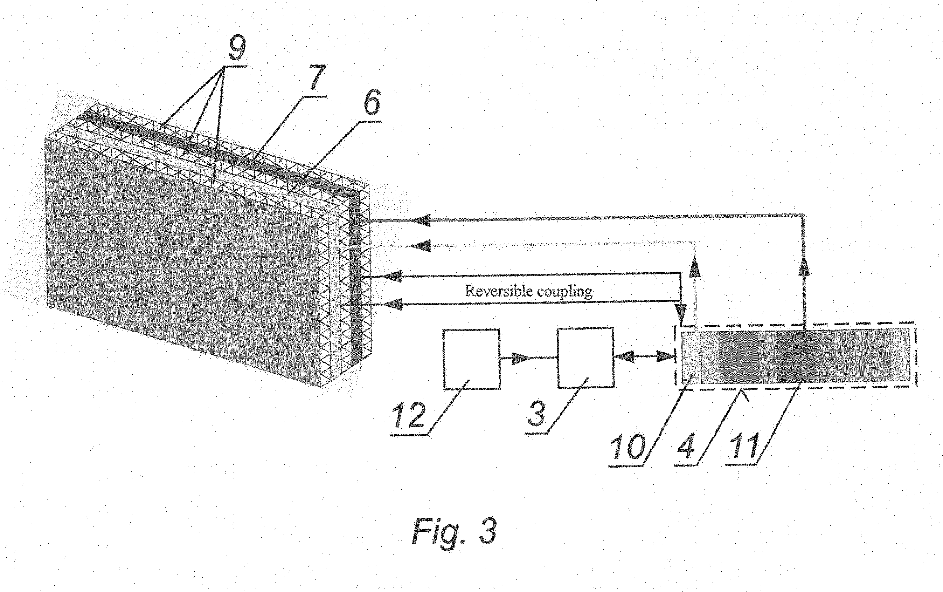

The subject-matter of the invention is explained in more detail in example embodiments shown in drawings, of which Fig. 1 shows a block diagram of the electronic system for improving functional parameters of an object equipped with a composite windowpane with a single inter-pane space used universally in motor cars; Fig. 2 - a block diagram of the system for improving functional parameters of an object equipped with transparent composite windowpane elements with two inter-pane spaces used in building structures as transparent partitions; and Fig. 3 - a block diagram of a manually controlled system of electronic devices system for improving functional parameters of an object equipped with transparent composite elements with two inter-pane spaces used in building structures as translucent partitions.

The method of improving functional parameters of objects provided with transparent composite elements in the form of composite windowpanes 8 and 9 consists in that in the surrounding of the windowpanes, by means of known methods and with the use of a known light meter 1 and appropriate known instruments, measured are the illumination intensity and such parameters of atmospheric air as e.g. dispersion, absorption, visible radiation, air temperature, pressure, humidity, fog density, precipitation, visibility, and lighting discharge. Next, depending on the obtained results of the measurement, empty inter-pane space 5 or spaces 6 and 7 of the windowpanes are filled with dye carriers from the system storage container 4 with colour or colours determined by microprocessor and computer program of the controller 2, which, after additive mixing, result in obtaining a required optimum homogenous colour in such inter-pane space or spaces adapted to current weather conditions in the air surrounding the object. The carriers of dyes filling the inter-pane space 5 or spaces 6 and 7 had values of their refraction indexes close to each other, whereas the used dye carriers included a liquid or a gas. Moreover, colours of the dyes were selected from the "colour circle".

The system of electronic devices realising the method according to the invention comprises a light meter 1 measuring intensity of the incident light, output of which Wy1 is connected with input We1 of a controller 2 equipped with a microprocessor with a computer program, output Wy2 of which is connected with input We2 of a reversible pump 3, coupled reversibly and tightly with a storage container 4 of dye carriers and with inter-pane space 5 or inter-pane space 6 and 7 of composite windowpanes 8 and 9. The colour carrier in the storage container 4 is a liquid, and in other embodiments of the system, a gas was used, whereby the dyes have colours included in the "colour circle" and values of refraction indexes of the dye carriers were close to each other.

The principle of operation of the electronic system allowing to realise the above-described method consists in that parameters of intensity of the incident light were measured by means of a light meter 1, and parameters of atmospheric air surrounding the composite windowpane 8 with a single inter-pane space 5 were measured with the use of another instrument (not shown in figures) coupled with the light meter, then the same light parameters and air parameter were measured for the air surrounding a composite windowpane 9 with two inter-pane spaces 6 and 7. The obtained results were transmitted by the light meter and the other instrument to the controller 2 coupled with them, where the microprocessor using an appropriate computer program selected a dye and dyes to be used for filling inter-pane space 5 in the composite windowpane 8 and inter-pane spaces 6 and 7 in the composite windowpane 9. Further, the controller 2 transmitted the information to a reversible pump 3 coupled reversibly with the system storage container 4 containing twelve dyes from the "colour circle" solved in water constituting their carrier. According to information conveyed by the controller 2, the pump selected a carrier with yellow colour 10 from the container and pumped it into the inter-pane space 5 of the composite windowpane 8. In case of the composite windowpane 9 with two inter-pane spaces 6 and 7, the reversible pump 3, according to information conveyed by the controller 2, selected a carrier with yellow colour 10 and a carrier with blue colour 11 and pumped them into the spaces. As a result of additive mixing of yellow colour 10 and blue colour 11, homogenous green colour was obtained adapted to currently prevailing conditions of illumination and atmospheric air surrounding the composite windowpane 9.

In a second embodiment not falling under the scope of the claims, the method of improving functional parameters of objects provided with transparent composite elements in the form of composite windowpanes 8 and 9 consists in that the user of an object selects the appropriate dye or dyes by his own using the visual method, and manually introduces the dye or the dyes by means of their carriers into the empty inter-pane space 5 or spaces 6 and 7, which, after the carriers being additively mixing, results in obtaining a required optimum homogenous colour in the inter-pane space 5 or spaces 6 and 7 of the object.

The system of electronic devices for manual operation comprises a microcomputer 12, preferably an analog-digital one, output of which is connected with input of a reversible pump 3 coupled reversibly and tightly with the storage container 4 for dye carriers and with inter-pane spaces 6 and 7 of composite windowpanes 9.
The principle of operation of the system consists in that the user of an object equipped with composite windowpanes 8 or 9, to fill the empty inter-pane spaces 5 or 6 and 7, uses an analog-digital microcomputer 12 and a keyboard to enter appropriate code or codes or, alternatively, name or names of the selected colour dye or dyes stored in the system storage container 4, and the microcomputer 12 transmits the information to the reversible pump 3 co-operating with the microcomputer and coupled reversibly with the storage container containing twelve dyes solved in a gaseous medium constituting a carrier for the dyes. The pump, according to the information transmitted by the microcomputer 12, selects a carrier with yellow colour 10 and a carrier with blue colour 11 and pumps them into the spaces 6 and 7. As a result of additive mixing of the colours, green colour is obtained, as required for the user of the object.

## Claims

1. A method of filling the between-pane space (5) or spaces (6,7) of composite windowpanes (8,9) having fluid-tight inter-pane spaces filled with coloured fluids, used especially in motor cars, aeroplanes, and building structures, by means of a pump (3) coupled with a set of storage containers (4) for said fluids by means of tubular conduits connecting the pump (3) and the storage containers (4) with the fluid-tight inter-pane space (5) or spaces (6,7) **characterised in that** the illumination intensity of the windowpanes (8,9) is measured with the use of a light meter (1) and parameters of atmospheric air surrounding the composite windowpane (8, 9) of the object are measured, and then, depending on the obtained results of the measurements, empty inter-pane space (5) or spaces (6,7) of the windowpanes are filled with a mixture of dye carriers from the system storage container (4) in such a way, controlled by the controller (2) running a control program, that said dye carriers, after being additively mixed with each other, result in obtaining the desired optimal homogenous colour in said inter-pane space (5) or spaces (6,7) adapted to current weather conditions prevailing in air around the windowpanes (8,9), whereby the dye carriers filling the inter-pane spaces (5,6,7) have values of their refraction indexes close to each other.

2. A system of composite windowpanes (8,9) having fluid-tight inter-pane spaces (5,6,7) to be filled with coloured fluid or fluids (10,11), a pump (3) coupled with a set of storage containers (4) for said fluids by means of tubular conduits connecting the pump (3) and the containers (4) with the inter-pane space or spaces (5,6,7) **characterised in that** the system further comprises means for measuring parameters of the atmospheric air surrounding the composite windowpanes and a light meter (1) measuring the illumination, the output Wy1) of which are connected with the input (We1) of a controller (2) equipped with a microprocessor with a computer program, the output (Wy2) of the controller (2) is connected with the input (We2) of a reversible pump (3) coupled reversibly and tightly with a storage container (4) for a set of dye carriers and with the inter-pane space (5) or inter-pane spaces (6) and (7) of composite windowpanes (8) or (9), whereby the controller (2) controls the additive mixing of dye carriers pumped to the inter-pane spaces (5,6,7) depending on the measured parameters of the air and the illumination.

3. The system according to claim 2 **characterised in that** it comprises a microcomputer (12), preferably an analog-digital one, the output of which is connected with the input of the reversible pump (3) coupled reversibly and tightly with a storage container (4) for a set of dye carriers and with inter-pane spaces (5,6,7) of the composite windowpanes (8) or (9).

## Patentansprüche

1. Das Verfahren zur Befüllung von Scheibenzwischenraum (5) oder Zwischenräumen (6, 7) der Verbundscheiben (8, 9) mit fluiddichten Scheibenzwischenräumen mit farbigen Fluiden gefüllt, verwendbar insbesondere in Autos, Flugzeugen und Bauobjekten, mittels Pumpe (3) gekoppelt mit einem Satz von Vorratsbehältern (4) für die genannten Fluide unter Einsatz von rohrförmigen Leitungen zur Verbindung der Pumpe (3) und der Vorratsbehälter (4) mit dem fluiddichten Scheibenzwischenraum (5) oder den Scheibenzwischenräumen (6, 7) **gekennzeichnet dadurch, dass** die Beleuchtungsstärke der Verbundscheiben (8, 9) unter Verwendung des Lichtmessers (1) gemessen wird und die Parameter der atmosphärischen Luft umgebend die Verbundscheiben (8, 9) dieses Objektes gemessen werden und danach, je nach den erzielten Ergebnissen dieser Messungen der leere Scheibenzwischenraum (5) oder Scheibenzwischenräume (6, 7) der Verbundscheiben mit dem Gemisch von Farbstoffträgern aus dem System der Vorratsbehälter (4) gefüllt werden, auf solche Weise, vom Regler (2), der ein Steuerprogramm ausführt, kontrolliert, dass die genannten Farbstoffträger nach dem additiven Vermischen miteinander, verursachen, dass die gewünschte optimale einheitliche Farbe in dem Zwischenraum (5) oder den Zwischenräumen (6, 7) erreicht wird, an die aktuellen Wetterbedingungen um die Verbundscheiben (8, 9) angepasst, wobei die Farbstoffträger, die diese Zwischenräume (5, 6, 7) befüllen, ähnliche Werte ihrer Brechungsindexe aufweisen.

2. Das System der Verbundscheiben (8, 9) mit fluiddichten Scheibenzwischenräumen (5, 6, 7) zur Befüllung mit mit farbigem Fluid bzw. Fluiden (10, 11), Pumpe (3) gekoppelt mit einem Satz von Vorratsbehältern (4) für genannte Fluide unter Einsatz von rohrförmigen Leitungen zur Verbindung der Pumpe (3) und der Vorratsbehälter (4) mit dem Scheibenzwischenraum bzw. den Scheibenzwischenräumen (5, 6, 7) **gekennzeichnet dadurch, dass** das System überdies die Mittel zur Messung der Parameter der atmosphärischen Luft umgebend diese Verbundscheiben sowie Lichtmesser (1) zur Messung der Beleuchtung aufweist, dessen Ausgang (Wy1) mit dem Eingang (We1) des Reglers (2) verbunden ist, ausgestattet mit einem Mikroprozessor mit Computerprogramm, der Ausgang (Wy2) des Reglers (2) ist mit dem Eingang (We2) der Umkehrpumpe (3) verbunden, die reversibel gekoppelt ist und dicht an Lagerbehälter (4) für Farbstoffträger und an Zwischenraum (5) bzw. Zwischenräume (6) und (7) der Verbundscheiben (8) bzw. (9) angeschlossen ist, wobei der Regler (2) das additive Vermischen der Farbstoffträger steuert, die zu den Scheibenzwischenräumen (5, 6, 7) gepumpt werden, je nach den gemessenen Werten der Luft und Beleuchtung.

3. Das System nach dem Anspruch 2 **dadurch gekennzeichnet, dass** es einen Mikrocomputer (12) aufweist, vorzugsweise einen analog-digitalen Computer, dessen Ausgang mit dem Eingang der Umkehrpumpe (3) verbunden ist, die reversibel gekoppelt ist und dicht an Lagerbehälter (4) für Farbstoffträger und an Zwischenräume (5, 6, 7) der Verbundscheiben (8) bzw. (9) angeschlossen ist.

## Revendications

1. La méthode pour remplir un espace (5) ou des espaces entre les deux vitres (6, 7) des doubles vitrages (8, 9) à des espaces étanches, utilisés particulièrement dans les automobiles, avions et ouvrages de construction, remplis de liquides colorés à l'aide d'une pompe (3) couplée avec un ensemble de containers (4) de ces liquides par des conduits tubulaires raccordant la pompe (3) et les containers (4) avec l'espace (5) ou les espaces entre les deux vitres (6, 7) **caractérisée en ce que** l'éclairement de ces vitres (8, 9) est mesuré avec un photomètre (1) et les paramètres de l'air atmosphérique ambiant ces doubles vitrages (8, 9) sont aussi mesurés, alors qu'en fonction des résultats de mesure obtenus, l'espace vide (5) ou les espaces vides entre les deux vitres (6, 7) des doubles vitrages sont remplis avec un mélange de colorants de l'ensemble de containers (4) de telle manière, contrôlée par un régulateur (2) réalisant un programme de contrôle, que lesdits colorants, lorsqu'ils sont additivement mélangés, entraînent l'obtention d'une couleur homogène optimale de l'espace entre les deux vitres (5) ou des espaces entre les deux vitres (6, 7) adaptée aux conditions actuelles de l'air atmosphérique ambiant ces doubles vitrages (8, 9), alors que les véhiculeurs de colorants qui remplissent les espaces entre les deux vitres (5, 6, 7) possèdent leurs valeurs de l'indice de réfraction comparables.

2. Le système des doubles vitrages (8, 9) à des espaces étanches entre les deux vitres (5, 6, 7) pour remplir avec de(s) liquide(s) coloré(s) (10, 11) la pompe (3) couplée avec un ensemble de containers (4) de ces liquides par des conduits tubulaires raccordant cette pompe (3) et ces containers (4) avec cet espace ou ces espaces entre les deux vitres (5, 6, 7) **caractérisé en ce que** ce système possède en plus les moyens de mesurer les paramètres de l'air atmosphérique ambiant ces doubles vitrages et le photomètre (1) qui mesure l'éclairement, et la sortie duquel (Wy1) est connectée avec l'entrée (We1) du régulateur (2) équipé d'un microprocesseur informatique, la sortie (Wy2) du régulateur (2) est connectée avec l'entrée (We2) de la pompe réversible (3) accouplée de façon réversible et étanche avec l'ensemble de containers (4) des véhiculeurs de colorants et avec l'espace (5) ou les espaces entre les deux vitres (6) et (7) des doubles vitrages (8) ou (9), alors que le régulateur (2) contrôle le mélange additif des véhiculeurs de colorants pompés dans les espaces entre les deux vitres (5, 6, 7) en fonction des valeurs des paramètres de l'air et de l'éclairement.

3. Le système selon la revendication 2 **caractérisé en ce qu'**il comprend le micro-ordinateur (12), de préférence analogique-digital, dont la sortie est connectée avec l'entrée de la pompe réversible (3) accouplée de façon réversible et étanche avec l'ensemble de containers des véhiculeurs de colorants (4) et avec les espaces entre les deux vitres (5, 6, 7) des doubles vitrages (8) ou (9).
